# EUROPÄISCHE PATENTSCHRIFT

(11) **EP 1 152 186 B1**
(45) Veröffentlichungstag und Bekanntmachung des Hinweises auf die Patenterteilung: **19.12.2007**
(21) Anmeldenummer: 01110479.1
(22) Anmeldetag: 27.04.2001
(51) Int. Cl.: F21V 8/00, G02F 1/13357

(54) **Anzeigen-Beleuchtungsvorrichtung**
Display illumination device
Dispositif d'éclairage pour dispositif d'affichage

(30) Priorität: 02.05.2000 DE 10021100
(43) Veröffentlichungstag der Anmeldung: 07.11.2001
(73) Patentinhaber: ROBERT BOSCH GMBH, 70442 Stuttgart (DE)
(72) Erfinder: Riechert, Juergen, 48477 Hoerstel-Bevergern (DE)

(56) Entgegenhaltungen:
- EP-A2- 0 510 421
- WO-A-99/06760
- GB-A- 2 337 628
- US-A- 5 070 431
- US-A- 5 375 043
- US-A- 5 806 955

## Beschreibung

### Stand der Technik

Die Erfindung geht aus von einer Vorrichtung zur Beleuchtung einer Anzeige nach der Gattung des Hauptanspruchs. Es sind schon Beleuchtungsvorrichtungen bekannt, bei denen Licht von Lichtquellen in einen Lichtleiter eingekoppelt und von dem Lichtleiter in Richtung einer Anzeige, z.B. einer Flüssigkristallanzeige, umgelenkt wird. Als Lichtquellen werden z.B. Glühlampen, Kaltkathodenfluoreszenzlampen, Elektrolumineszenzfolien oder Leuchtdioden verwendet. Für die Beleuchtung einer Farbanzeige kann mittels Glühlampen und Elektrolumineszenzfolien eine Beleuchtung in einem gewünschten, großen Farbbereich nicht erreicht werden. Kaltkathodenfluoreszenzlampen können mit einer geeigneten Phosphormischung einen weiten Farbbereich abdecken, sind jedoch teuer und erfordern eine Hochspannungsansteuerung. Leuchtdioden bieten entweder nur einen schmalen Spektralbereich, liefern im blauen und grünem Bereich nur eine geringe Leuchtdichte oder sind bei hoher Leuchtdichte teuer. Aufgrund des schmalen Spektrums müssen für verschiedene Anwendungen, bei denen jeweils verschiedene Farben gemischt werden gegebenenfalls verschiedene Leuchtdioden eingesetzt werden.

Aus der EP 0 510 421 A2 ist eine mehrfarbige Lichtanzeige bekannt, bei der benachbart zu einem Lichtleiter Lichtquellen angeordnet sind, wobei zwischen dem Lichtleiter und den Lichtquellen jeweils Farbfilter angeordnet sind. In einer anderen Ausführungsform können auch verschiedenfarbige Lichtquellen verwendet werden. Die Lichtquellen werden über einen Ansteuerungskreis so angesteuert, dass entweder rote Lichtquellen oder grüne Lichtquellen zur Beleuchtung einer Flüssigkristallanzeige über den Lichtleiter angesteuert werden.

Aus der US 5,070,431 ist eine Flüssigkristallanzeige mit einer Beleuchtung bekannt, bei der das Licht von Lichtquellen in einen Lichtleiter eingekoppelt und durch eine einer Flüssigkristallanzeige abgewandten Seite angeordnete Prismenstruktur in Richtung eines Diffusors und der Flüssigkristallanzeige umgelenkt wird.

Aus der US 5,375,043 ist eine Beleuchtung einer Flüssigkristallanzeige über einen Lichtleiter bekannt, bei dem in Vertiefungen in dem Lichtleiter verschiedenfarbige Leuchtdioden angeordnet sind, die über eine Ansteuerungseinheit angesteuert werden können, so dass in dem Lichtleiter verschiedenfarbiges Licht bereitgestellt wird.

Aus der US 5,806,955 ist eine Lichteinkopplungsstruktur für einen planaren Lichtwellenleiter beschrieben, dessen Licht in Richtung einer Flüssigkristallanzeige ausgekoppelt wird. Der Lichtwellenleiter weist mehrere Vertiefungen auf, in die gegebenenfalls auch verschiedenfarbige und einzeln ansteuerbare Leuchtdioden eingebracht werden. Auf der Innenseite der Vertiefungen der in den Lichtleiter eingebrachten Öffnungen sind Prismenstrukturen angeordnet.

### Vorteile der Erfindung

Die erfindungsgemäße Vorrichtung zur Beleuchtung mit den Merkmalen des Hauptanspruchs hat dem gegenüber den Vorteil, dass das Licht von Lichtquellen unterschiedlicher Farbe über einen Lichtleiter zu einer Anzeige umlenkbar ist und hierdurch eine Farbmischung möglich ist. So kann auf die Verwendung von Kaltkathodenfluoreszenzlampen verzichtet werden, ohne Einbußen bei der Farbdarstellung hinnehmen zu müssen. Besonders vorteilhaft ist, dass gleiche Lichtquellen in verschiedenen Arten von Beleuchtungsvorrichtungen verwendet werden können, die jeweils mit einer Beleuchtung in einer bestimmten Farbe gewünscht werden. So ist z.B. möglich, für verschiedene Benutzer eine verschiedenfarbige Anzeige bereits durch eine werksseitige Voreinstellung der jeweiligen, gewünschten Hinterleuchtungsfarbe zu gewährleisten, ohne dass unterschiedliche Lichtquellen verbaut werden müssen und eine Anpassung der Fertigung für die Beleuchtungsvorrichtungen verschiedener Geräte erfolgen muss.

Erfindungsgemäß sind die Lichtquellen in Vertiefungen des Lichtleiters eingebracht, da hierdurch Platz gespart und ein Wirkungsgrad der Lichteinkopplung in den Lichtleiter verbessert wird.

Erfindungsgemäß wird Licht zunächst in einen ersten Lichtleiter eingekoppelt und von dort in einen zweiten Lichtleiter ausgekoppelt, durch den das Licht in Richtung der Anzeige umgelenkt wird. Hierdurch ist es möglich, eine Lichtmischung unterschiedlich farbigen Lichts im ersten Lichtleiter durchzuführen, so dass das Licht bereits homogen durchmischt in den zweiten Lichtleiter eintreten kann und hiermit eine farblich homogene Beleuchtung der Anzeige erfolgt.

Erfindungsgemäß ist der erste Lichtleiter transparent und der zweite Lichtleiter diffus streuend ausgeführt. Hierdurch kann eine Lichtmischung in dem ersten Lichtleiter ohne Absorption erfolgen, während z.B. durch eine Zugabe von streuenden Partikeln in den zweiten Lichtleiter eine kostengünstige Lichtumlenkung in Richtung der Anzeige realisiert wird.

Weiterhin ist vorteilhaft, an dem ersten Lichtleiter sowohl in der Richtung des zweiten Lichtleiters als auch auf der dem zweiten Lichtleiter abgewandten Seite eine Prismenstruktur anzuordnen. Durch die vorzugsweise an den Lichtleiter angeformten Prismen ist einerseits eine Einkopplung mit einem hohem Wirkungsgrad in den zweiten Lichtleiter möglich, andererseits wird aus dem Lichtleiter austretendes Licht vorzugsweise durch einen Reflektor wieder in den Lichtleiter zurückreflektiert, damit auch dieses Licht zu der Anzeige gelangen kann.

Weiterhin ist vorteilhaft, zumindest rote, grüne und blaue Lichtquellen zu verwenden, um auch weißes Licht darstellen zu können.

Außerdem ist vorteilhaft, die beschriebene Vorrichtung zur Beleuchtung sowohl zur Hinterleuchtung als auch zur Frontbeleuchtung einer Anzeige, vorzugsweise einer Flüssigkristallanzeige zu verwenden.

### Zeichnungen

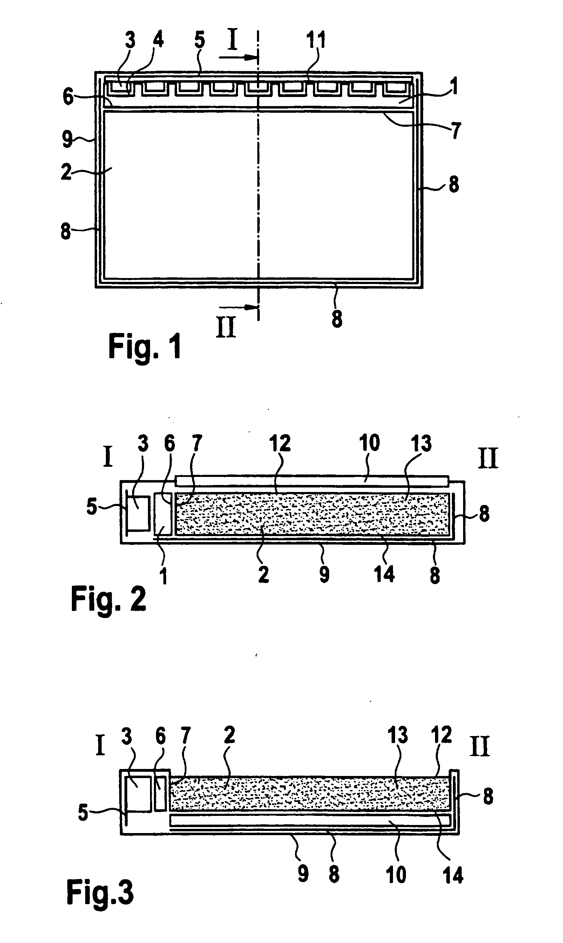

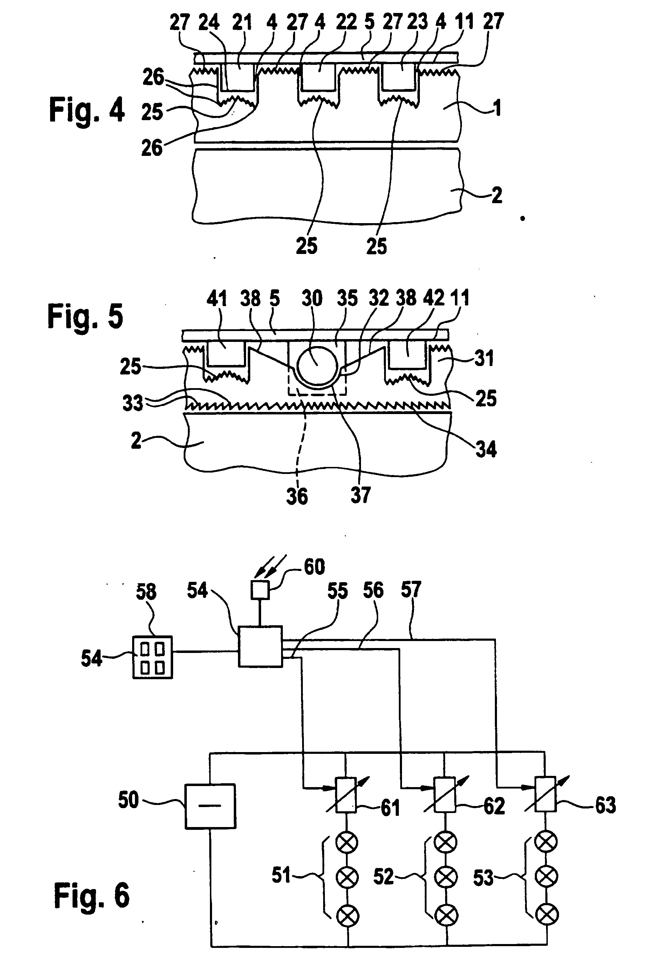

Ausführungsbeispiele der Erfindung sind in den Zeichnungen dargestellt und in der nachfolgenden Beschreibung näher erläutert. Es zeigen Figur 1 eine Aufsicht auf eine erfindungsgemäß ausgeführte Vorrichtung zur Beleuchtung eine Anzeige, Figur 2 eine Seitenansicht eines Ausführungsbeispiels einer erfindungsgemäßen Vorrichtung zur Beleuchtung entlang der Linie von I nach II in der Figur 1 mit einer Anzeige, Figur 3 eine Seitenansicht eines zweiten Ausführungsbeispiels einer erfindungsgemäßen Vorrichtung zur Beleuchtung entlang der Linie von I nach II in der Figur 2 als eine Frontbeleuchtung einer Anzeige. Figur 4 zeigt einen Ausschnitt aus einer erfindungsgemäßen Vorrichtung zur Beleuchtung mit Lichtquellen sowie einem Ausschnitt aus einem ersten und zweiten Lichtleiter in einer Aufsicht, Figur 5 ein zweites Ausführungsbeispiel für eine Ausführung eines ersten Lichtleiters mit Lichtquellen und einem zweiten Lichtleiter in einer Aufsicht. Figur 6 zeigt ein Ausführungsbeispiel für eine elektrische Ansteuerung von Lichtquellen unterschiedlicher Farbe.

### Beschreibung des Ausführungsbeispiels

In der Figur 1 ist eine Aufsicht auf eine erfindungsgemäße Vorrichtung zur Beleuchtung dargestellt. Ein erster Lichtleiter 1 ist neben einem zweiten, flächig ausgeführten zweiten Lichtleiter 2 angeordnet. An einer dem zweitem Lichtleiter 2 abweisenden Seitenfläche des ersten Lichtleiters 1 sind Leuchtdioden 3 angeordnet, die in Vertiefungen 4 des ersten Lichtleiters 1 eingebracht sind. Aus Gründen der Übersichtlichkeit der Zeichnung ist in der Figur 1 nur eine Leuchtdiode 3 und eine Vertiefung 4 bezeichnet. Die Leuchtdioden 3 sind an einer Leiterplatte 5 angeordnet. Das von den Leuchtdioden 3 in den ersten Lichtleiter 1 eingekoppelte Licht wird über eine erste Seitenfläche 6 des ersten Lichtleiters 1 in eine erste Seitenfläche 7 des zweiten Lichtleiters 2 eingekoppelt, die der ersten Seitenfläche 6 des ersten Lichtleiters 1 zuweist. Die übrigen Seitenflächen des ersten Lichtleiters 1 und des zweiten Lichtleiters 2 sind von einem Reflektor 8 umgeben. Die Vorrichtung zur Beleuchtung ist in einem Gehäuse 9 angeordnet. Bei dem in der Figur 1 dargestellten Ausführungsbeispiel sind als Lichtquellen Leuchtdioden 3 gewählt. Es werden zumindest Leuchtdioden 3 in zwei verschiedenen Farben verwendet, die vorzugsweise farblich abwechselnd nebeneinander angeordnet sind. Mögliche Farbkombinationen sind z.B. weiss-rot, rot-grün, gelb-rot sowie blau, grün und rot. Die Leuchtdioden 3 werden über aus der vorzugsweise aus einem Kunststoffmaterial ausgeführten Leiterplatte 5 angeordnete und in der Figur 1 nicht gezeigte Leiterbahnen mit einer Betriebsspannung versorgt. Hierbei sind die Leuchtdioden unterschiedlicher Farbe jeweils getrennt ansteuerbar. Das von den Leuchtdioden 3 erzeugte Licht wird zunächst in den transparent ausgeführten ersten Lichtleiter 1 eingekoppelt. In dem ersten Lichtleiter 1 wird das Licht gemischt und anschließend durch die erste Seitenfläche 6 sowie die erste Seitenfläche 7 in den zweiten Lichtleiter 2 eingekoppelt. Der zweite Lichtleiter 2 ist ebenso wie der erste Lichtleiter 1 aus einem Kunststoffmaterial, z.B. Polymethylmetacrylat (PMMA) oder Polycarbonat (PC) ausgeführt. Der zweite Lichtleiter 2 ist jedoch im Gegensatz zu dem ersten Lichtleiter 1 lichtstreuend ausgeführt. Hierzu sind vorzugsweise Streupartikel in den ersten Lichtleiter 1 eingebracht. Streupartikel können z.B. kleine Farbstoffkörnchen oder Kunststoffkügelchen aus einem anderem Kunststoffmaterial mit einem anderem Brechungsindex sein. So ist z.B. eine Beimischung von Polycarbonatkugeln in ein PMMA-Material möglich. Sowohl der erste Lichtleiter 1 als auch der zweite Lichtleiter 2 werden vorzugsweise in einem Spritzgussverfahren hergestellt. In einem in dem Figur 1 nicht gezeigten Ausführungsbeispiel ist es auch möglich, den ersten Lichtleiter 1 und den zweiten Lichtleiter 2 optisch verbunden und einstückig auszuführen. Aus dem zweiten Lichtleiter 2 seitlich austretendes Licht wird ebenso wie aus dem ersten Lichtleiter 1 seitlich austretendes Licht durch den Reflektor 8 wieder in den ersten Lichtleiter 1 bzw. den zweiten Lichtleiter 2 reflektiert. Der Reflektor 8 ist vorzugsweise aus einer reflektierenden Metallfolie oder Kunststoffolie ausgeführt. Das Gehäuse 9, vorzugsweise aus einem Kunststoffmaterial, dient sowohl der Halterung der einzelnen Komponenten, als auch dem Schutz gegen Berührungen. Ebenfalls ist in dem Gehäuse 9 eine in der Figur 1 nicht gezeigte Spannungsversorgung sowie gegebenenfalls eine Anzeigenansteuerung angeordnet. Indem die Vertiefungen 4 ein Einbringen der Leuchtdioden 3 in den ersten Lichtleiter 1 ermöglichen, kann die Leiterplatte 5 möglichst nahe an den ersten Lichtleiter 1 angenähert werden. Vorzugsweise ist die Leiterplatte 5 auf einer dem ersten Lichtleiter 1 zuweisenden Seite 11 mit einem reflektierenden Material versehen, vorzugsweise einem weißen Kunststoffaufdruck. In der Figur 2 ist ein Schnitt durch das Gehäuse 9 der in der Figur 1 gezeigten Beleuchtungsvorrichtung dargestellt, wobei auch eine Anzeige 10 gezeigt ist. Die Anzeige 10 ist parallel zu einer ersten Oberfläche 12 des zweiten Lichtleiters 2 angeordnet, wobei die erste Oberfläche 12 an die erste Seitenfläche 7 ungefähr rechtwinklig anschließt. Das aus den Leuchtdioden 3 in den ersten Lichtleiter 1 ausgestrahlte und dort vermischte Licht wird in dem zweiten Lichtleiter 2 durch die dort eingebrachten und symbolisch gekennzeichneten Streupartikel 13 in Richtung der Anzeige 10 umgelenkt. Der Reflektor 8 ist auch entlang einer zweiten Oberfläche 14 des zweiten Lichtleiters 2 angeordnet, die der ersten Oberfläche 12 gegenüber liegt, so dass auch das durch die zweite Oberfläche 14 austretende Licht mittels des Reflektors 8 wieder in den zweiten Lichtleiters 2 zurückreflektiert wird. Die Anzeige 10 ist in einem bevorzugten Ausführungsbeispiel als eine Flüssigkristallanzeige mit einer Vielzahl einzeln ansteuerbarer Bildpunkte ausgeführt. Details der Flüssigkristallanzeige sind in der Zeichnung nicht dargestellt. Anstelle einer Flüssigkristallanzeige kann auch eine statische Anzeige, z.B. eine bedruckte, zumindest teilweise transparente Kunststoffplatte als Anzeige 10 verwendet werden. In einem weiteren, in der Figur 2 nicht gezeigten Ausführungsbeispiel wird an Stelle der Streupartikel 13 ein transparenter zweiter Lichtleiter 2 mit einem auf der zweiten Oberfläche 14 angeordneten Rasterdruck oder mit einer auf der zweiten Oberfläche 14 angeordneten Prismenstrukturen verwendet, die der Auskopplung in Richtung der Anzeige 10 dienen. Dabei ist auch jeweils möglich, den zweiten Lichtleiter 2 transparent auszuführen und/oder den zweiten Lichtleiter 2 mit dem ersten Lichtleiter 1 einstückig auszuführen.

Bei der Ausführung gemäß der Figur 2 wird die Anzeige 10 durch das Licht der Leuchtdioden 3 hinterleuchtet. In der Figur 3 wird die Anzeige 10 dagegen von einer Vorderseite beleuchtet, wobei das auf die Anzeige 10 gelenkte Licht von dem hinter der Anzeige 10 angeordneten Reflektor 8 reflektiert wird und nach nochmaliger Durchquerung der Anzeige 10 und des zweiten Lichtleiters 2 zu einem Betrachter der Anzeige 10 gelangt. Die Lichtführung von den Leuchtdioden 3 zu der Anzeige 10 unterscheidet sich insofern von dem in der Figur 1 dargestellten Ausführungsbeispiel, dass das Licht durch die Streupartikel 13 nun zu der entgegengesetzten zweiten Oberfläche 14 des zweiten Lichtleiters 2 ausgekoppelt wird, an der die Anzeige 10 in diesem Ausführungsbeispiel angeordnet ist.

In der Figur 4 ist ein Bereich des ersten Lichtleiters 1 gemäß der Darstellung der Figur 1 vergrößert dargestellt, zusammen mit Lichtquellen und einem Stück des zweiten Lichtleiters 2. An der Leiterplatte 5 ist eine erste Leuchtdiode 21, eine zweite Leuchtdiode 22 und eine dritte Leuchtdiode 23 angeordnet. In einer Vertiefung 4 ist der erste Lichtleiter 1 auf einer einer Lichtaustrittsfläche 24 der ersten Leuchtdiode 21 zugewandten Fläche mit einer Prismenstruktur 25 versehen. Die Prismen der Prismenstruktur 25 sind vorzugsweise als Pyramiden oder Kegel an den ersten Lichtleiter 1 angeformt, vorzugsweise bei der Herstellung des erstes Lichtleiters 1 im Spritzgussverfahren. In einem bevorzugten Ausführungsbeispiel ist die Prismenstruktur 25 als eine Sägezahnstruktur ausgebildet, wobei die Sägezähne in Richtung der Mitte der Lichtaustrittsfläche 24 der ersten Leuchtdiode 21 zeigen. Die Sägezahnstruktur ist dabei kreissymmetrisch zu einem Mittelpunkt der Lichtaustrittsfläche 24 angeordnet. In einem in der Zeichnung nicht gezeigten Ausführungsbeispiel ist auch eine Ausbildung der Prismenstruktur 25 als eine Fresnellinse möglich. In einem Randbereich 26 der Vertiefung 4 weist die Prismenstruktur 25 einen größeren Abstand zu der Lichtaustrittsfläche 24 auf, als in einem zentralem Bereich der Vertiefung 4. Eine in gleicher Weise ausgeführte Prismenstruktur 25 ist sowohl vor der zweiten Leuchtdiode 22 als auch vor der dritten Leuchtdiode 23 angeordnet. Die Prismenstruktur 25 dient dabei einer Aufweitung des von den Leuchtdioden 21, 22 und 23 in den ersten Lichtleiter 1 eingekoppelten Lichts, damit eine bessere Farbmischung in dem ersten Lichtleiter 1 erfolgt. Der erste Lichtleiter 1 weist außerhalb der Vertiefungen 4 auf seiner der Leiterplatte 5 zuweisenden Seite ebenfalls eine Prismenstruktur 27 auf, die eine bessere Einkopplung des aus dem ersten Lichtleiter 1 austretenden und durch die dem ersten Lichtleiter 1 zuweisende Seite 11 zurück reflektierten Lichts dient, wobei die Seite 11 vorzugsweise mit einem reflektierenden Aufdruck versehen ist. Die Prismenstruktur 27 weist zylinderförmige, pyramidenförmige oder mit einem dreieckigen Querschnitt versehene Prismen auf. Die erste Leuchtdiode 21 ist vorzugsweise als eine rote, die zweite Leuchtdiode 22 als eine grüne und die dritte Leuchtdiode 23 als eine blaue Leuchtdiode ausgeführt, so dass nach einer Lichtmischung in dem ersten Lichtleiter 1 weißes Licht in den zweiten Lichtleiter 2 einkoppelbar ist.

In der Figur 5 ist ein weiteres Ausführungsbeispiel dargestellt, wobei an Stelle einer in der Figur 4 gezeigten zweiten Leuchtdiode eine Glühlampe 30 in einen ersten Lichtleiter 31 einstrahlt. Der erste Lichtleiter 31 unterscheidet sich von dem ersten Lichtleiter 1 hinsichtlich einer Ausnehmung 32 für die Glühlampe 30 und hinsichtlich einer Prismenstruktur 33, 34 die an einer dem zweiten Lichtleiter 2 zugewandten Seitenfläche des ersten Lichtleiters 31 angeordnet ist. Die Glühlampe 30 ist auf einem Lampensockel 35 angeordnet, der die Leiterplatte 5 kontaktiert und dessen Fläche über das Volumen der Glühlampe 30 hinausgeht. In einem bevorzugten Ausführungsbeispiel ist der Lampensockel 35 auf einer der Anzeige 10 abgewandten Seite des ersten Lichtleiters 1 angeordnet, wobei der Lampensockel 35 in einem Bereich 36, der in der Figur 5 gestrichelt eingezeichnet ist, in den Bereich des ersten Lichtleiters 31 hineinragt und von dem ersten Lichtleiter 31 überdeckt wird. Die Ausnehmung 32 für die Glühlampe 30 weist in einem ersten Bereich 37 eine Abrundung auf, die an einem Rand der Glühlampe 30 in flache, schräg zu der Leiterplatte 5 verlaufende Kanten 38 übergeht. Die Prismenstrukturen 33, 34 sind vorzugsweise in Sägezahnform ausgeführt. Bei der Prismenstruktur 33 und 34 weisen Sägezähne jeweils mit der flachen Seite des Sägezahns in die Richtung der Glühlampe 30. Dadurch wechselt im Bereich der Glühlampe 30 die Ausrichtung der Sägezähne, so dass in der Ansicht gemäß der Figur 5 links von der Glühlampe 30 die Sägezähne der Prismenstruktur 33 in einer ersten Ausrichtung und gemäß der Ansicht in der Figur 5 rechts von der Glühlampe 30 die Prismenstruktur 34 in einer zweiten Ausrichtung der Sägezähne an dem ersten Lichtleiter 31 angeordnet sind. Die Prismenstrukturen 25 vor einer ersten Leuchtdiode 41 und einer der zweiten Leuchtdiode 42, die links bzw. rechts neben der Glühlampe 30 angeordnet sind, sind gleich den Prismenstrukturen 25 gemäß der Beschreibung zu der Figur 4 ausgeführt. Die Leuchtdioden 41, 42 werden insbesondere dazu verwendet, ein Spektrum der Glühlampe 30 dessen Schwerpunkt im gelb-roten Bereich liegt, zu ergänzen, um möglichst weißes Licht zu erzeugen.

In der Figur 6 ist eine mögliche Schaltung von ersten Lichtquellen 51, zweiten Lichtquellen 52 und dritten Lichtquellen 53 dargestellt. Die verschiedenen Lichtquellen 51, 52 und 53 sind in regelmäßig wechselnder Abfolge an einem Lichtleiter z.B. in einer Vorrichtung zur Beleuchtung gemäß der Darstellung in der Figur 1 angeordnet. Die Lichtquellen sind in den Stromkreis einer Spannungsquelle 50 geschaltet, wobei die ersten Lichtquellen 51 über ein erstes Potenziometer 61, die zweiten Lichtquellen 52 über ein zweites Potenziometer 62 und die dritten Lichtquellen 53 über ein drittes Potenziometer 63 steuerbar sind, wobei der Widerstand der Potenziometer jeweils veränderbar ist. Die Potenziometer 61,62,63 werden über ein Steuergerät 54 angesteuert, wobei das erste Potenziometer 61 über eine erste Steuerleitung 55 das zweite Potenziometer 62 über eine zweite Steuerleitung 56 und das dritte Potenziometer 63 über eine dritte Steuerleitung 57 steuerbar ist. Ein Steuergerät 54 ist mit einer Bedieneinheit 58 verbunden, an der Tasten 59 angeordnet sind. Ferner ist das Steuergerät 54 in einem bevorzugten Ausführungsbeispiel mit einem lichtempfindlichen Sensor 60 verbunden. Das Steuergerät 54 ist vorzugsweise als ein Mikroprozessor ausgeführt, der in Abhängigkeit von über die Tasten 59 der Bedieneinheit 58 eingegebenen Befehlen eine Steuerung der Potenziometer 61, 62, 63 vornimmt. Vorzugsweise sind die ersten Lichtquellen 51 als rote Leuchtdioden die zweiten Lichtquellen 52 als grüne Leuchtdioden und die dritten Lichtquellen 53 als blaue Leuchtdioden ausgeführt, wobei die verschiedenfarbigen Lichtquellen jeweils abwechselnd an dem ersten Lichtleiter angeordnet sind. Eine Helligkeitssteuerung ist entsprechend einer Stromspannungskennlinie der Lichtquellen durch die Potenziometer möglich. Wird z.B. eine grün-blaue Beleuchtung gefordert, wird von dem Steuergerät 54 mittels einer Einstellung der Potenziometer 61, 62, 63 eine Betriebsspannung für eine maximale Nennleistung der Leuchtdioden an die dritten Lichtquellen 53 sowie durch das Potenziometer 62 eine maximale Nennleistung an die zweiten Lichtquellen 52 angelegt. Die ersten Lichtquellen 51 werden dagegen abgeschaltet. Wird nun eine rot-gelbe Beleuchtung gewünscht, so werden die ersten Lichtquellen 51 voll und z.B. zweiten Lichtquellen 52 mit halber Leistung betrieben, während die dritten Lichtquellen 53 nur gering aktiviert werden. In einem bevorzugten Ausführungsbeispiel ist an einem Ende des Fertigungsprozesses die Bedieneinheit 58 abtrennbar und kann für ein nächstes, zu fertigendes Gerät verwendet werden. Die Einstellung der Potenziometer 61, 62, 63 bleibt in dem Steuergerät 54 vorzugsweise in einem nicht flüchtigen Speicher abgelegt. In einem weiteren bevorzugten Ausführungsbeispiel ist eine Steuerung der Farbe der Hinterleuchtung über den lichtempfindlichen Sensor 60 möglich. Während bei Tag z.B. eine Beleuchtung mit einer Einsteuerung aller Leuchtdioden in weiß erfolgt, so ist z.B. bei einer Nachtanzeige bei einer reduzierten, über den lichtempfindlichen Sensor erfaßten Umgebungshelligkeit eine Umschaltung auf eine rein blaue Farbdarstellung mit einer ausschließlichen Ansteuerung der dritten Lichtquellen 53 möglich.

## Patentansprüche

1. Vorrichtung zur Beleuchtung einer Anzeige (10) umfassend einen ersten Lichtleiter (1,31), welcher transparent ist, und umfassend eine Vielzahl von an dem ersten Lichtleiter (1, 31) angeordneten Lichtquellen (3, 21, 22, 30, 41, 42, 51, 52, 53), wobei das Licht der Lichtquellen (3, 21, 22, 30, 41, 42, 51, 52, 53) in den ersten Lichtleiter (1, 31) eingekoppelt wird und das Licht in Richtung der Anzeige (10) gelenkt wird, wobei zumindest von zwei Lichtquellen (3, 21, 22, 30, 41, 42, 51, 52, 53) Licht unterschiedlicher Farben abgestrahlt wird, und umfassend eine elektrische Ansteuerung (61, 62, 63) der Lichtquellen (3, 21, 22, 30, 41, 42, 51, 52, 53) zu einem jeweils getrennten elektrischen Ansteuern zumindest der Lichtquellen unterschiedlicher Farbe (3, 21, 22, 30, 41, 42, 51, 52, 53) und zum Ansteuern (61, 62, 63) der Lichtquellen unterschiedlicher Farbe (3, 21, 22, 30, 41, 42, 51, 52, 53) zum Wählen einer Farbe der Hinterleuchtung, wobei in dem ersten Lichtleiter (1, 31) Vertiefungen (4, 37) angeordnet sind, wobei die Lichtquellen (3, 21, 22, 30, 41, ,42, 51, 52, 53) in den Vertiefungen (4, 37) angeordnet sind, wobei die Lichtquellen (3, 21, 22, 30, 41, 42, 51, 52, 53) > als Leuchtdioden (21, 22, 23) ausgeführt sind und wobei der erste Lichtleiter (1, 31) in wenigstens einer Vertiefung (4) des Lichtleiters (1, 31) auf einer einer Lichtaustrittsfläche (24) einer Leuchtdiode (21) zugewandten Fläche mit einer Prismenstruktur (25) versehen ist, wobei das Licht der Lichtquellen (3, 21, 22, 30, 41, 42. 51, 52, 53) in den ersten Lichtleiter (1, 31) eingekoppelt wird, **dadurch gekennzeichnet, dass** die vorrichtung einen zweiten Lichtleiter (2) umfasst, welcher diffus licht streuend ausgeführt ist und dessen eine Oberfläche parallel zur Anzeige (10) angeordnet ist, wobei das Licht von dem ersten Lichtleiter (1, 31) in eine Seitenfläche des zweiten Lichtleiters (2) ein gekoppelt wird, und das Licht von der einen Oberfläche des zweiten Lichtleiters (2) in Richtung der Anzeige (10) ausgekoppelt wird.

2. Vorrichtung nach Anspruch 1, **dadurch gekennzeichnet, dass** an dem ersten Lichtleiter (1, 31) Prismenstrukturen (33, 34) an einer dem zweiten Lichtleiter (2) zugewandten Seitenfläche angeordnet sind und dass das Licht durch die Prismenstrukturen (33, 34) in den zweiten Lichtleiter (2) umgelenkt wird.

3. Vorrichtung zur Beleuchtung nach einem der vorhergehenden Ansprüche, **dadurch gekennzeichnet, dass** an einer der Anzeige (10) abgewandten Seite des ersten und/oder des zweiten Lichtleiters (1, 2, 31) und/oder an einer Seitenfläche des ersten und/oder des zweiten Lichtleiters (1, 2, 31) ein Reflektor (8) angeordnet ist.

4. Vorrichtung zur Beleuchtung nach einem der vorhergehenden Ansprüche, **dadurch gekennzeichnet, dass** zumindest rotes, grünes und blaues Licht aussendende Lichtquellen (21, 22, 23) an dem ersten Lichtleiter (1, 31) angeordnet sind.

5. Vorrichtung zur Beleuchtung nach einem der vorhergehenden Ansprüche, **dadurch gekennzeichnet, dass** an einer dem zweiten Lichtleiter (2) abgewandten Seitenfläche des ersten Lichtleiters (1, 31) eine Prismenstruktur (25, 26) angeordnet ist.

6. Verwendung einer Vorrichtung zur Beleuchtung nach einem der vorhergehenden Ansprüche zu einer Hinterleuchtung oder zu einer Frontbeleuchtung einer Anzeige (10), vorzugsweise einer Flüssigkristallanzeige.

## Claims

1. Device for illuminating a display (10) comprising a first fibreoptic conductor (1, 31), which is transparent, and comprising a large number of light sources (3, 21, 22, 30, 41, 42, 51, 52, 53), which are arranged on the first fibreoptic conductor (1, 31), the light from the light sources (3, 21, 22, 30, 41, 42, 51, 52, 53) being injected into the first fibreoptic conductor (1, 31), and the light being directed in the direction of the display (10), light of different colours being emitted at least by two light sources (3, 21, 22, 30, 41, 42, 51, 52, 53), and comprising an electrical drive system (61, 62, 63) of the light sources (3, 21, 22, 30, 41, 42, 51, 52, 53) for electrically driving, in each case separately, at least the light sources of different colours (3, 21, 22, 30, 41, 42, 51, 52, 53) and for driving (61, 62, 63) the light sources of different colours (3, 21, 22, 30, 41, 42, 51, 52, 53) for selecting a colour for the backlighting, depressions (4, 37) being arranged in the first fibreoptic conductor (1, 31), the light sources (3, 21, 22, 30, 41, 42, 51, 52, 53) being arranged in the depressions (4, 37), the light sources (3, 21, 22, 30, 41, 42, 51, 52, 53) being in the form of light-emitting diodes (21, 22, 23), and the first fibreoptic conductor (1, 31), in at least one depression (4) of the fibreoptic conductor (1, 31) on a face facing a light exit face (24) of a light-emitting diode (21), being provided with a prism structure (25), the light from the light sources (3, 21, 22, 30, 41, 42, 51, 52, 53) being injected into the first fibreoptic conductor (1, 31), **characterized in that** the device comprises a second fibreoptic conductor (2), which is designed to be diffusely light-scattering and whose one surface is arranged parallel to the display (10), the light from the first fibreoptic conductor (1, 31) being injected into a side face of the second fibreoptic conductor (2), and the light from the one surface of the second fibreoptic conductor (2) being output in the direction of the display (10).

2. Device according to Claim 1, **characterized in that** prism structures (33, 34) are arranged on a side face facing the second fibreoptic conductor (2) on the first fibreoptic conductor (1, 31), and **in that** the light is deflected by the prism structures (33, 34) into the second fibreoptic conductor (2).

3. Illumination device according to one of the preceding claims, **characterized in that** a reflector (8) is arranged on a side, which faces away from the display (10), of the first and/or the second fibreoptic conductor (1, 2, 31) and/or on a side face of the first and/or of the second fibreoptic conductor (1, 2, 31).

4. Illumination device according to one of the preceding claims, **characterized in that** light sources (21, 22, 23) emitting at least red, green and blue light are arranged on the first fibreoptic conductor (1, 31) .

5. Illumination device according to one of the preceding claims, **characterized in that** a prism structure (25, 26) is arranged on a side face, which faces away from the second fibreoptic conductor (2), of the first fibreoptic conductor (1, 31).

6. Use of an illumination device according to one of the preceding claims for backlighting or frontlighting a display (10), preferably a liquid crystal display.

## Revendications

1. Dispositif d'éclairage d'un dispositif d'affichage (10) comprenant un premier guide de lumière (1, 31), transparent, et ayant un grand nombre de sources lumineuses (3, 21, 22, 30, 41, 42, 51, 52, 53) prévues dans le premier guide de lumière (1, 31),
la lumière des sources lumineuses (3, 21, 22, 30, 41, 42, 51, 52, 53) étant couplée dans les premiers guides de lumière (1, 31) et la lumière est dirigée vers le dispositif d'affichage (10),
au moins deux sources lumineuses (3, 21, 22, 30, 41, 42, 51, 52, 53) émettant de la lumière de différentes couleurs et comprenant une commande électrique (61, 62, 63) des sources lumineuses (3, 21, 22, 30, 41, 42, 51, 52, 53), pour une commande électrique respectivement séparée au moins des sources lumineuses de couleurs différentes (3, 21, 22, 30, 41, 42, 51, 52, 53), et pour commander (61, 62, 63) les sources lumineuses de couleurs différentes (3, 21, 22, 30, 41, 42, 51, 52, 53), pour sélectionner une couleur pour l'éclairage du fond,
des cavités (4, 37) étant prévues dans le premier guide de lumière (1, 31),
les sources lumineuses (3, 21, 22, 30, 41, 42, 51, 52, 53) étant logées dans les cavités,
les sources lumineuses (3, 21, 22, 30, 41, 42, 51, 52, 53) étant des photodiodes (21, 22, 23), et
les premiers guides de lumière (1, 31) ayant une structure de prismes (25),dans au moins une cavité (4) du guide de lumière (1, 31), sur une surface tournée vers la surface de sortie de lumière (24) d'une photodiode (21),
la lumière des sources lumineuses (3, 21, 22, 30, 41, 42, 51, 52, 53) étant injectée dans le premier guide de lumière (1, 31),
**caractérisé en ce que**
le dispositif comporte un second guide de lumière (2) réalisé de manière à diffracter une lumière diffuse et dont la surface supérieure est parallèle au dispositif d'affichage (10), et
la lumière d'une surface supérieure du second guide de lumière (2) étant découplée en direction du dispositif d'affichage (10).

2. Dispositif selon la revendication 1,
**caractérisé en ce que**
le premier guide de lumière (1, 31) comporte des structures de prismes (33, 34) sur une surface latérale tournée vers le second guide de lumière (2), et
la lumière est déviée par les structures de prismes (33, 34) dans le second guide de lumière (2).

3. Dispositif d'éclairage selon l'une des revendications précédentes,
**caractérisé en ce que**
un côté non tourné vers le dispositif d'affichage du premier et/ou du second guide de lumière (1, 2, 31) et/ou une surface latérale du premier et/ ou du second guide de lumière (1, 2, 31) comporte un réflecteur (8).

4. Dispositif d'éclairage selon l'une des revendications précédentes,
**caractérisé en ce que**
le premier guide de lumière (1, 31) est muni de sources lumineuses (21, 22, 23) émettant au moins une lumière rouge, verte et bleue.

5. Dispositif d'éclairage selon l'une des revendications précédentes,
**caractérisé en ce que**
la surface latérale du premier guide de lumière (1, 31) non tournée vers le second guide de lumière (2) comporte une structure de prismes (25, 26).

6. Application d'un dispositif d'éclairage selon l'une des revendications précédentes pour l'éclairage arrière ou l'éclairage frontal d'un dispositif d'affichage (10), de préférence d'un dispositif d'affichage à cristaux liquides.
